# FASCICULE DE BREVET EUROPEEN

(11) **EP 3 815 969 B1**
(45) Date de publication et mention de la délivrance du brevet: **13.09.2023**
(21) Numéro de dépôt: 19306425.0
(22) Date de dépôt: 04.11.2019
(51) Int. Cl.: B60P 3/22, E03F 7/10, B65D 90/54, B65D 90/58, B65D 88/12

(54) **VEHICULE HYDROCUREUR COMPORTANT UNE CITERNE DE STOCKAGE OPTIMISEE**
ROHRREINIGUNGSFAHRZEUG, DAS EINEN OPTIMIERTEN SPEICHERTANK UMFASST
SEWER-CLEANING VEHICLE COMPRISING AN OPTIMISED STORAGE TANK

(43) Date de publication de la demande: 05.05.2021
(73) Titulaire: Huwer Holding, 26100 Romans-sur-Isere (FR)
(72) Inventeur: AVICE, Jean-Michel, 72200 BAZOUGES-SUR-LE-LOIR (FR)
(74) Mandataire: Gauchet, Fabien Roland

(56) Documents cités:
- US-A1- 2014 017 018
- US-A1- 2018 104 622
- US-A1- 2018 313 131
- US-B2- 9 528 259

## Description

### DOMAINE TECHNIQUE DE L'INVENTION

L'invention concerne un véhicule hydrocureur comportant une citerne de stockage améliorée.

### ETAT DE LA TECHNIQUE ANTERIEURE

La conception d'un véhicule hydrocureur nécessite de faire des compromis au sein du gabarit imposé pour le véhicule hydrocureur. En particulier, le volume de stockage de la citerne de stockage d'un véhicule hydrocureur est un point dur dans la conception d'un tel véhicule. En effet, il est nécessaire de partager le volume du gabarit entre la citerne de stockage d'une part, et d'autre part, les différents accessoires et équipements permettant de réaliser les opérations d'hydrocurage et de nettoyage, qui se déroulent parfois dans des endroits exigus. Cela est d'autant plus vrai lorsque le véhicule hydrocureur est en configuration de conduite, configuration permettant au véhicule hydrocureur de se déplacer entre deux points distants. En particulier, l'une des problématiques des véhicules hydrocureurs est la capacité de stockage de la citerne de stockage qui doit être maximisée au mieux afin, d'une part, de pouvoir transporter une quantité suffisante d'eau destinée à réaliser les opérations de nettoyage et, d'autre part, un volume de stockage des boues de curage aspirées lors de ces même opérations de nettoyage. Le document US 9 528 259 B2 divulgue le préambule de la revendication 1.

### EXPOSE DE L'INVENTION

Un but de l'invention est donc de fournir un véhicule hydrocureur qui, dans un gabarit imposé, permet une capacité de stockage optimisée.

**A** cette fin, il est prévu, selon l'invention, un véhicule hydrocureur comportant une citerne de stockage comprenant, selon un axe longitudinal, un fond de cuve, une virole et un couvercle basculant, des moyens de mise en oeuvre du couvercle basculant, permettant de le faire passer entre des positions de fermeture et d'ouverture, et des moyens de verrouillage du couvercle en position de fermeture, les moyens de mise en oeuvre et les moyens de verrouillage étant positionnés en saillie d'une face externe du couvercle basculant, les moyens de verrouillage comprennent une première série de vérins dont un cylindre de chaque vérin est monté mobile à basculement sur la face externe du couvercle basculant.

Avantageusement, mais facultativement, le véhicule hydrocureur selon l'invention présente au moins l'une des caractéristiques techniques suivantes :
- le couvercle basculant est de forme concave ;
- les moyens de verrouillage s'étendent dans un plan parallèle à un plan du couvercle basculant ;
- les moyens de verrouillage comprennent une série de verrous articulés, chacun des verrous articulés étant monté mobile à basculement sur une périphérie radialement externe du couvercle basculant ;
- les moyens de mise en oeuvre comportent une deuxième série de vérins, chaque vérin comprenant un cylindre fixé libre à basculement sur une périphérie radialement externe du couvercle basculant ;
- les moyens de mise en oeuvre comportent une série de flasques-support, chaque flasque-support étant associé à un vérin de la deuxième série de vérins, un cylindre du vérin associé étant monté libre à basculement sur le flasque-support considéré ;
- chaque flasque-support s'étend en saillie depuis la périphérie radialement externe du couvercle basculant et dans un plan parallèle à un plan du couvercle basculant ; et,
- le couvercle basculant comporte un flasque de charnière fixé sur la face externe, s'étendant en saillie depuis la face externe et monté libre à basculement sur un axe de charnière fixé à une extrémité de la virole.

### BREVE DESCRIPTION DES FIGURES

D'autres caractéristiques et avantages de l'invention ressortiront à la lecture de la description qui suit d'un mode de réalisation de l'invention. Aux dessins annexés :
- la figure 1 est une vue tridimensionnelle d'un véhicule hydrocureur selon l'invention ;
- la figure 2 est une vue de côté montrant seulement la citerne de stockage ainsi qu'une partie du châssis du véhicule hydrocureur de la figure 1 ;
- la figure 3 est une vue tridimensionnelle de la figure 2 ;

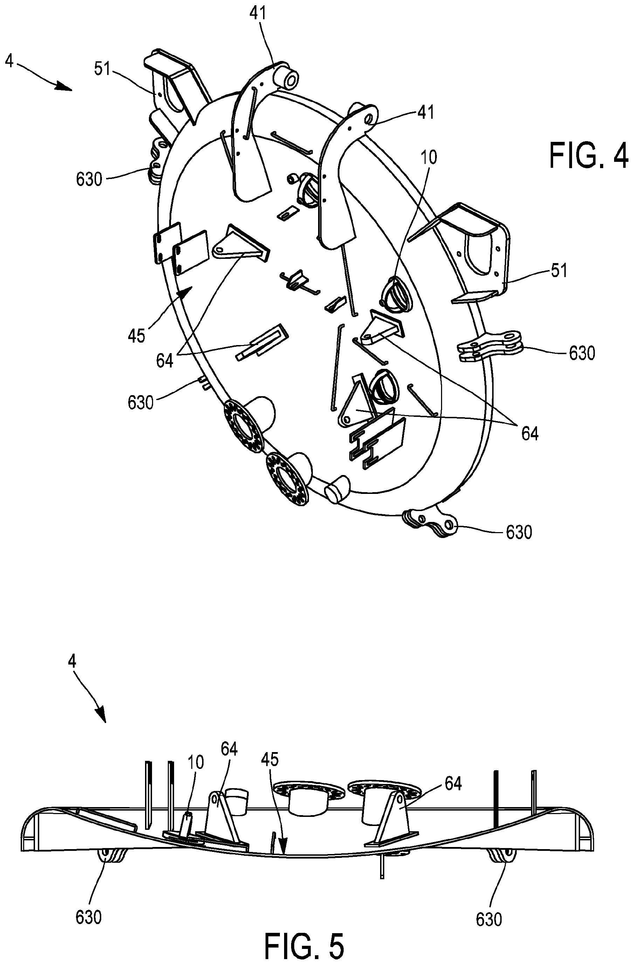

- la figure 4 est une vue tridimensionnelle d'un couvercle basculant de la citerne de stockage illustrée aux figures 2 et 3 ; et
- la figure 5 est une vue en coupe selon un diamètre de couvercle basculant de la figure 4.

Pour plus de clarté, les éléments identiques ou similaires sont repérés par des signes de référence identiques sur l'ensemble des figures.

### DESCRIPTION DETAILLEE D'UN MODE DE REALISATION

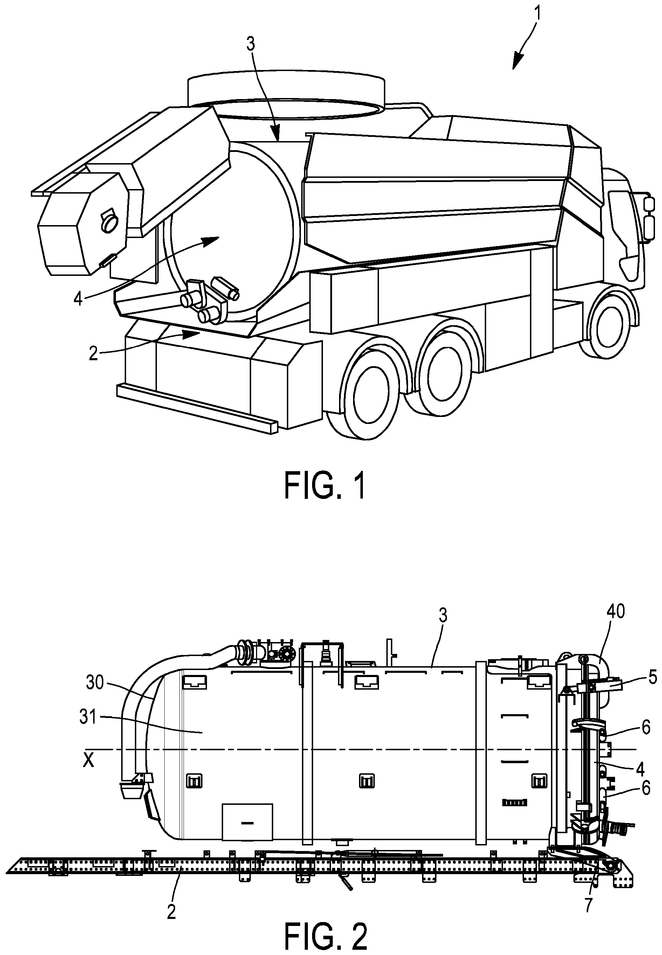

En référence à la figure 1, un véhicule hydrocureur 1 selon l'invention est ici un véhicule de type poids lourd comprenant un châssis porteur 2 sur lequel est montée une citerne de stockage 3. La citerne de stockage 3 comporte un couvercle basculant 4 qui est positionné à l'arrière du véhicule hydrocureur 1 selon l'invention.

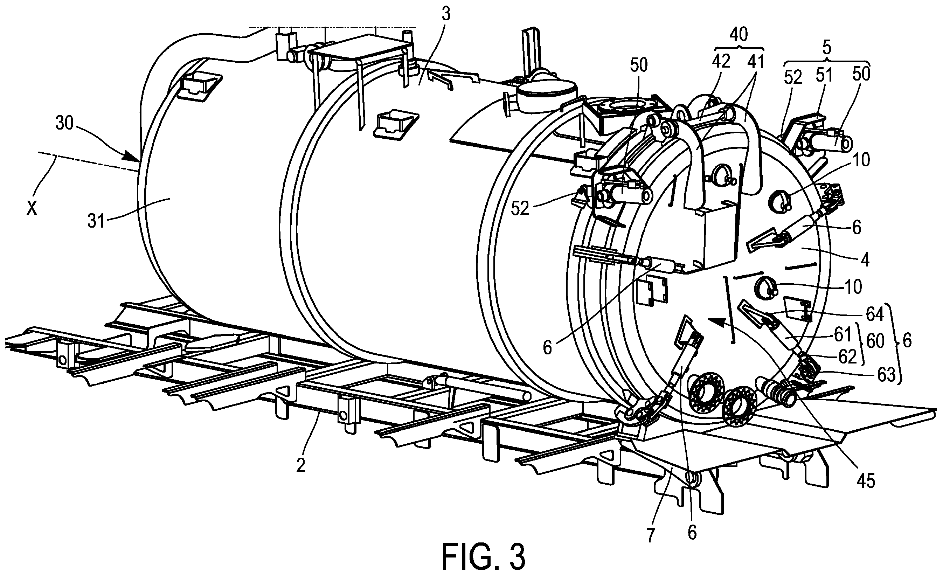

En référence aux figures 2 et 3, nous allons détailler un agencement de la citerne de stockage 3 du véhicule hydrocureur 1 selon l'invention. La citerne de stockage 3 comprend, selon un axe longitudinal X, ici horizontal sur la figure 2, depuis le côté gauche vers le côté droit toujours sur la figure 2, un fond de cuve 30 situé à une extrémité, dite avant, d'une virole 31, formant un corps principal de la citerne de stockage 3, et un couvercle basculant 4 ménagé à l'autre extrémité, dite arrière, de la virole 31. La citerne de stockage 3 est montée mobile à basculement sur le châssis porteur 2 par l'intermédiaire d'une articulation 7. Ce montage mobile à basculement de la citerne de stockage 3 sur le châssis porteur 2 permet de réaliser des opérations de bennage, de sorte à évacuer des boues de curage collectées dans la citerne de stockage 3 via une ouverture de vidange que referme le couvercle basculant 4.

Le couvercle basculant 4 est mobile à basculement sur l'extrémité arrière de la virole 31 de la citerne de stockage 3, via une charnière 40 positionnée en partie haute de la citerne de stockage 3. Ici, la charnière 40 comporte un axe de charnière 42, monté sur la virole 31 au niveau de son extrémité arrière, ainsi qu'une paire de flasques de charnière 41 fixés sur une face externe 45 du couvercle basculant 4.

D'autre part, le véhicule hydrocureur 1 selon l'invention comporte des moyens de verrouillage 6 du couvercle basculant 4 en position de fermeture. Les moyens de verrouillage 6 comportent une première série de vérins 60, ici au nombre de quatre. Chaque vérin 60 comporte un cylindre 61 dans lequel est monté à coulissement un piston 62. Le cylindre 61 est, par ailleurs, monté mobile à basculement sur la face externe 45 du couvercle basculant 4, ici, par l'intermédiaire d'une oreille de fixation 64 formée d'une plaque s'étendant en saillie sensiblement perpendiculairement depuis la face externe 45 du couvercle basculant 4. D'autre part, les moyens de verrouillage 6 comprennent une série de verrous 63, ici articulés. Chacun des verrous 63 est monté mobile à basculement sur une périphérie radialement externe du couvercle basculant 4, via un palier 630 solidaire du couvercle basculant 4. Le mouvement de basculement est assuré par le vérin 60 qui est associé au verrou 63 articulé considéré. Pour cela, l'extrémité libre du piston 62 du vérin 60 est montée libre à rotation sur une extrémité du verrou 63 articulé associé. Le verrou 63 présente une extrémité opposée libre munie d'un crochet qui vient coopérer avec un ergot monté en saillie sur la face externe de la virole 31 de la citerne de stockage 3 au niveau de l'extrémité arrière de la virole 31 comportant l'ouverture de vidange que vient refermer le couvercle basculant 4 en position de fermeture. Ainsi, du fait de la concavité de la face externe 45 du couvercle basculant 4, les moyens de verrouillage, en particulier les vérins 60 s'étendent sensiblement dans un plan parallèle à un plan du couvercle basculant 4 et, ce, en regard de la face externe 45 dudit couvercle basculant 4. Seules, les extrémités libres des verrous 63 articulés ainsi que leur ergot associé occupent une très faible partie de l'espace qui est situé latéralement à la virole 31 de la citerne de stockage 3 au niveau de l'extrémité arrière de ladite virole 31. Ici, la première série de vérins 60 associés à autant de verrous 63 articulés est répartie sur une circonférence du couvercle basculant 4.

D'autre part, le véhicule hydrocureur 1 selon l'invention comporte des moyens de mise en oeuvre 5 du couvercle basculant 4, permettant de faire passer le couvercle basculant 4 entre une position de fermeture (dans laquelle le couvercle basculant 4 vient refermer l'ouverture de vidange de la citerne de stockage 3 en venant en appui sur l'extrémité arrière de la virole 31) et une position d'ouverture (dans laquelle le couvercle basculant 4 est basculé autour de l'axe de charnière 42 de sorte à libérer l'ouverture de vidange de sorte à permettre une évacuation des boues de curage stockées dans la citerne de stockage 3).

Dans le mode de réalisation illustré dans les figures, les moyens de mise en oeuvre 5 comprennent une deuxième série de vérins 50, dont chaque vérin 50 comporte un cylindre fixé libre à basculement sur une périphérie radialement externe du couvercle basculant 4. Pour cela, les moyens de mise en oeuvre 5 comprennent une série de flasques-support 51 qui s'étendent, chacun, en saillie depuis la périphérie radialement externe du couvercle basculant 4 et, ce, dans un plan parallèle à un plan du couvercle basculant 4. D'autre part, chaque vérin 50 comporte un piston 52 dont une extrémité libre est fixée à basculement sur une périphérie radialement externe de la virole 31 de la citerne de stockage 3, au niveau de l'extrémité arrière de ladite virole 31. Ici, les moyens de mise en oeuvre 5 comportent deux vérins 50, positionnés de part et d'autre de la charnière 40. Par conséquent, les moyens de mise en oeuvre 5 comportent donc une série de flaques-support 51 où il y a autant de flasques-support 51 que de vérins 50 dans la deuxième série de vérins 50 des moyens de mise en oeuvre 5 du couvercle basculant 4. De sorte à ne pas empiéter plus que nécessaire en regard de la surface latérale de la virole 31, chacun des cylindres des vérins 50 est fixé sur le flasque-support 51 qui lui est associé au niveau d'une extrémité par laquelle une tige du piston 52 pénètre au sein du cylindre du vérin 50. Ainsi, chacun des cylindres de vérins 50 s'étend en saillie depuis le flasque-support 51 associé, en arrière du couvercle basculant 4, alors que l'extrémité libre du piston 52 fait saillie de la face externe de la virole 31 de la citerne de stockage 3 au niveau de l'extrémité arrière de la virole 31 de la citerne de stockage 3.

En variantes de réalisation, d'autres équipements peuvent être prévus sur le couvercle basculant 4, et en particulier en saillie de la face externe 45, comme des emplacements pour des hublots 10 de niveau à boues permettant de vérifier le niveau de boues de curage collectées et stockées au sein de la citerne de stockage 3. Du fait de la concavité de la face externe 45 du couvercle basculant 4, ces équipements, en particulier les moyens de verrouillage, sont contenus dans la concavité du couvercle basculant et ne font saillie que de manière la plus minimale qui soit par rapport à la citerne de stockage 3, libérant ainsi plus d'espace dans le gabarit du véhicule hydrocureur 1 selon l'invention.

Une structure telle que précédemment décrite de la citerne de stockage 3, et en particulier de l'agencement des équipements et moyens de verrouillage et de mise en oeuvre qui lui sont associés permet de libérer de l'espace dans le gabarit du véhicule hydrocureur 1 selon l'invention et ainsi de pouvoir positionner dans ce gabarit une citerne de stockage 3 de plus grande dimension que celle qui est habituellement utilisée dans les véhicules hydrocureurs de l'art antérieur. Ainsi, une plus grande autonomie d'intervention est possible pour un véhicule hydrocureur 1 selon l'invention ainsi aménagé et d'un gabarit donné.

Bien entendu, il est possible d'apporter à l'invention de nombreuses modifications sans pour autant sortir du cadre de celle-ci.

## Revendications

1. Véhicule hydrocureur (1) comportant une citerne de stockage (3) comprenant, selon un axe longitudinal, un fond de cuve (30), une virole (31) et un couvercle basculant (4), des moyens de mise en oeuvre (5,40) du couvercle basculant, permettant de le faire passer entre des positions de fermeture et d'ouverture, et des moyens de verrouillage (6) du couvercle en position de fermeture, les moyens de mise en oeuvre et les moyens de verrouillage étant positionnés en saillie d'une face externe (45) du couvercle basculant, **caractérisé en ce que** les moyens de verrouillage comprennent une première série de vérins (60) dont un cylindre (61) de chaque vérin est monté mobile à basculement sur la face externe du couvercle basculant.

2. Véhicule hydrocureur selon la revendication 1, **caractérisé en ce que** le couvercle basculant est de forme concave.

3. Véhicule hydrocureur selon la revendication 1 ou 2, **caractérisé en ce que** les moyens de verrouillage s'étendent dans un plan parallèle à un plan du couvercle basculant.

4. Véhicule hydrocureur selon l'une des revendications 1 à 3, **caractérisé en ce que** les moyens de verrouillage comprennent une série de verrous articulés (63), chacun des verrous articulés étant monté mobile à basculement sur une périphérie radialement externe du couvercle basculant.

5. Véhicule hydrocureur selon l'une des revendications 1 à 4, **caractérisé en ce que** les moyens de mise en oeuvre comportent une deuxième série de vérins (50), chaque vérin comprenant un cylindre fixé libre à basculement sur une périphérie radialement externe du couvercle basculant.

6. Véhicule hydrocureur selon la revendication 5, **caractérisé en ce que** les moyens de mise en oeuvre comportent une série de flasques-support (51), chaque flasque-support étant associé à un vérin de la deuxième série de vérins, un cylindre du vérin associé étant monté libre à basculement sur le flasque-support considéré.

7. Véhicule hydrocureur selon la revendication 6, **caractérisé en ce que** chaque flasque-support s'étend en saillie depuis la périphérie radialement externe du couvercle basculant et dans un plan parallèle à un plan du couvercle basculant.

8. Véhicule hydrocureur selon l'une des revendications 1 à 7, **caractérisé en ce que** le couvercle basculant comporte un flasque de charnière (41) fixé sur la face externe, s'étendant en saillie depuis la face externe et monté libre à basculement sur un axe de charnière (42) fixé à une extrémité de la virole.

## Patentansprüche

1. Kanalreinigungsfahrzeug (1), umfassend einen Speichertank (3), der entlang einer Längsachse einen Tankboden (30), einen Mantel (31) und einen Klappdeckel (4) sowie ein Umsetzungsmittel (5, 40) des Klappdeckels, die den Übergang zwischen einer geschlossenen und einer geöffneten Position ermöglicht, und ein Verriegelungsmittel (6) des Deckels in der geschlossenen Position umfasst, wobei das Umsetzungsmittel und das Verriegelungsmittel so positioniert sind, dass sie von einer Außenfläche (45) des Klappdeckels hervorstehen, **dadurch gekennzeichnet, dass** das Verriegelungsmittel eine erste Reihe von Stellantrieben (60) umfasst, von denen ein Zylinder (61) jedes Stellantriebs so montiert ist, dass er auf der Außenfläche der Klappdeckels kippbar ist.

2. Kanalreinigungsfahrzeug nach Anspruch 1, **dadurch gekennzeichnet, dass** der Klappdeckel eine konkave Form aufweist.

3. Kanalreinigungsfahrzeug nach Anspruch 1 oder 2, **dadurch gekennzeichnet, dass** sich das Verriegelungsmittel in einer Ebene parallel zu einer Ebene des Klappdeckels erstreckt.

4. Kanalreinigungsfahrzeug nach einem der Ansprüche 1 bis 3, **dadurch gekennzeichnet, dass** das Verriegelungsmittel eine Reihe von Gelenkriegeln (63) umfasst, wobei jeder der Gelenkriegel kippbar an einem radial äußeren Umfang des Klappdeckels montiert ist.

5. Kanalreinigungsfahrzeug nach einem der Ansprüche 1 bis 4, **dadurch gekennzeichnet, dass** das Umsetzungsmittel eine zweite Reihe von Stellantrieben (50) umfasst, wobei jeder Stellantrieb einen festen Zylinder umfasst, der frei kippbar an einem radial äußeren Umfang des Deckels befestigt ist.

6. Kanalreinigungsfahrzeug nach Anspruch 5, **dadurch gekennzeichnet, dass** das Umsetzungsmittel eine Reihe von Stützflanschen (51) umfasst, wobei jeder Stützflansch einem Stellantrieb der zweiten Reihe von Stellantrieben zugeordnet ist und ein Zylinder des zugehörigen Stellantriebs frei kippbar auf dem betreffenden Stützflansch montiert ist.

7. Kanalreinigungsfahrzeug nach Anspruch 6, **dadurch gekennzeichnet, dass** sich jeder Stützflansch vorstehend vom radial äußeren Umfang des Klappdeckels und in einer Ebene parallel zu einer Ebene des Klappdeckels erstreckt.

8. Kanalreinigungsfahrzeug nach einem der Ansprüche 1 bis 7, **dadurch gekennzeichnet, dass** der Klappdeckel einen an der Außenfläche befestigten Scharnierflansch (41) aufweist, der sich vorstehend von der Außenfläche erstreckt und auf einer Scharnierachse (42), die an einem Ende des Mantels befestigt ist, frei kippbar montiert ist.

## Claims

1. A sewer cleaning vehicle (1) including a storage tank (3) comprising, along a longitudinal axis, a vessel bottom (30), a ring (31) and a tipping cover (4), means for implementing (5, 40) the tipping cover, enabling the same to switch between closing and opening positions, and means for locking (6) the cover into the closing position, the implementation means and locking means being positioned protruding from an outer face (45) of the tipping cover, **characterised in that** the locking means comprise a first series of rams (60), one cylinder (61) of each ram is mounted tippingly movable to the outer face of the tipping cover.

2. The sewer cleaning vehicle according to claim 1, **characterised in that** the tipping cover is of concave shape.

3. The sewer cleaning vehicle according to claim 1 or 2, **characterised in that** the locking means extend in a plane parallel to a plane of the tipping cover.

4. The sewer cleaning vehicle according to one of claims 1 to 3, **characterised in that** the locking means comprise a series of articulated locks (63), each of the articulated locks being mounted tippingly movable to a radially outer periphery of the tipping cover.

5. The sewer cleaning vehicle according to one of claims 1 to 4, **characterised in that** the implementation means include a second series of rams (50), each ram comprising a cylinder fixed tippingly free to a radially outer periphery of the tipping cover.

6. The sewer cleaning vehicle according to claim 5, **characterised in that** the implementation means include a series of support-flanges (51), each support-flange being associated with a ram of the second series of rams, one cylinder of the associated ram being mounted tippingly free to the considered support-flange.

7. The sewer cleaning vehicle according to claim 6, **characterised in that** each support-flange extends protruding from the radially outer periphery of the tipping cover and in a plane parallel to a plane of the tipping cover.

8. The sewer cleaning vehicle according to one of claims 1 to 7, **characterised in that** the tipping cover includes a hinge flange (41) fixed to the outer face, extending protruding from the outer face and mounted tippingly free to a hinge pin (42) fixed to one end of the ring.
